# EUROPEAN PATENT SPECIFICATION

(11) **EP 1 656 991 B1**
(45) Date of publication and mention of the grant of the patent: **01.04.2009**
(21) Application number: 05256891.2
(22) Date of filing: 07.11.2005
(51) Int. Cl.: B01J 23/62, B01J 35/00, C10G 35/09

(54) **Reforming process using high density catalyst**
Reformierungsverfahren mit einem hochdichten Katalysator
Procédé de reformage en utilisant un catalyseur à haute densité

(30) Priority: 12.11.2004 US 986585
(43) Date of publication of application: 17.05.2006
(73) Proprietor: UOP LLC, Des Plaines, IL 60017-5017 (US)
(72) Inventor: Lapinski, Mark Paul, Des Plaines, Illinois 60017-5017 (US); Moser, Mark David, Des Plaines, Illinois 60017-5017 (US); Godfrey, Veronica Marie, Des Plaines, Illinois 60017-5017 (US); Cohn, Michelle Joy, Des Plaines, Illinois 60017-5017 (US)
(74) Representative: Chung, Hsu Min

(56) References cited:
- US-A- 3 692 701
- US-A- 3 844 935
- US-A- 3 883 419
- US-A- 3 929 683
- US-A- 4 020 011
- US-A- 5 358 920
- US-A- 5 849 657
- HOBSON M.C. ET AL: 'A Mössbauer Spectroscopy Study of Platinum-Tin Reforming Catalysts' JOURNAL OF CATALYSIS vol. 142, 1993, pages 641 - 654

## Description

### BACKGROUND OF THE INVENTION

This invention relates to a shaped catalyst with a specified high density and with a specified low ratio of platinum-group component to tin component, and relates to a process for using the catalyst for hydrocarbon conversion such as with reforming of naphtha range feedstock into high-octane aromatics.

Hydrocarbon conversion units such as catalytic naphtha reformers need to provide greater quantities of hydrogen for clean fuels, high-octane product for gasoline, and aromatics for petrochemicals production. An improved catalyst with higher density and lower platinum-tin ratio allows reforming units to increase throughput for increased production of hydrogen, C₅⁺ and/or aromatic product volumes. Compared to low density catalysts, the new catalyst has higher activity and allows a higher pinning margin. Pinning margin refers to the margin at which a moving bed catalyst will flow through a process reactor relative to hydrocarbon flow conditions that will otherwise cause the catalyst to suspend movement and effectively pin or stick to the reactor walls or center-pipe. A lower pinning margin is generally associated with moving catalyst flow-distribution problems causing non-uniform reactor performance. For refiners who are already pushing higher feed hydrocarbon rates through their reforming units, loading the higher density catalyst can be a simple, efficient way to further increase feed hydrocarbon throughput. The hydrocarbon hydraulic capacity in many reforming units can be increased by as much as 20% or more for constant recycle hydrogen gas flow. The lower coke production of the higher density catalyst is especially important for refiners who are coke-make limited by continuous-regeneration capacity and want to increase feed rate, but may not be able to increase recycle gas rate.

Many catalysts containing platinum and tin are disclosed in the prior art for use in naphtha reforming.

US 3,745,112 discloses a hydrocarbon conversion catalyst and process based on a uniformly dispersed platinum-tin composite. A specific example of the catalyst disclosed is a combination of a platinum group metal, tin oxide and halogen with an alumina carrier material wherein the tin oxide component is uniformly dispersed throughout the alumina carrier material in a relatively small particle size.

US 3,920,615 discloses a calcination treatment of at least 800°C which is used to reduce the surface area of an alumina catalyst to between 10 and 150 m²/gm. The catalyst contains a platinum group metal with a second metal such as copper and displays improved selectivity in a process for long chain mono-olefin dehydrogenation from paraffins as part of the production of alkyl-aryl sulfonates.

Canadian Paten no. 1,020,958 discloses a catalyst consisting of at least one platinum group component used in a reaction zone with a hydrocarbon and hydrogen under conditions causing coke deposition on the catalyst. The catalyst is regenerated by wet oxidation and the process is repeated-until the surface area is between 20 and 90% of the original value. The catalyst is then treated to incorporate at least one promoter metal such as tin. The resulting catalyst shows increased stability in use thus requiring less frequent regeneration or replacement.

US 6,514,904 discloses a catalyst and a process for using the catalyst generally for the conversion of hydrocarbons and specifically for naphtha reforming.

US 6,500,082 and US 6,605,566 disclose reforming and dehydrogenation catalysts prepared using an organic-based impregnation.of tin to achieve a high interaction with platinum, as determined with characterization based on Mössbauer spectroscopy.

US-A-3,844,935 discloses converting a refinery process stream containing isohexanes to a suitable lead-free motor fuel by contacting the stream with a tin-promoted noble metal-Group II aluminate catalyst.

US-A-3,692,701 discloses a dehydrogenation catalyst consisting essentially of a Group VIII metal or an oxide thereof on a carrier consisting essentially of zinc aluminate spinel containing tin or an oxide of tin.

US-A-4,020,011 discloses a method for preparing a hydrocarbon conversion catalyst comprising from about 0.01 to 3 weight % of a Group VIII noble metal component, from 0.1 to about 5 weight % of a halogen component and a tin component composited with a refractory carrier.

US-3,883,419 discloses a supported platinum group metal-tin hydrocarbon conversion catalyst prepared by (1) impregnating a refractory inorganic oxide support with an aqueous solution of a halogen acid containing a platinum group metal component; (2) drying the platinum group metal impregnated carrier; (3) impregnating the dried platinum group metal impregnate with a solution of a divalent tin compound in a non-oxidizing and non-reducing atmosphere; and (4) drying the resulting impregnate.

### SUMMARY OF THE INVENTION

Applicants have now found that a catalyst with an increased alumina density and a decreased ratio of platinum to tin that provides significant process advantages in conversion of hydrocarbon feedstocks such as naphtha. In particular, applicants have found that a catalyst with increased alumina density provides lower coke-make, better stability, or greater activity than would otherwise be expected in reforming processes.

In the first aspect of the present invention there is a provided hydrocarbon conversion catalyst comprising a platinum-group component, a tin component, and a support component having an average bulk density greater than 0.6 g/cc and preferably greater than 0.65 g/cc, wherein the bulk mass ratio of platinum-group to tin is less than 0.9 and preferably less than 0.85, wherein the platinum-group component is platinum present in an amount from 0.01 to 2.0 mass-% of the catalyst calculated on an elemental basis, and wherein said catalyst contains associated tin in specific platinum-tin clusters, with associated tin present in an amount at least 33 mass-% of the tin component, and the effective molar ratio of associated tin to platinum in said clusters is at least 0.65 as characterized with Mössbauer spectroscopy. Preferably the support is an alumina component with a X-ray powder diffraction pattern such that the ratio of peak intensities at respective two-theta Bragg angle values of 34.0 to 32.5 is at least 1.2, and the ratio of peak intensities at respective two-theta Bragg angle values of 46.0 to 45.5 is at most 1.1. Moreover, the tin is preferably characterized using Mössbauer spectroscopy to measure the amount of tin associated with platinum-group metal within specific platinum-group tin clusters.

Another embodiment is a process using the catalyst in a catalytic reforming process for converting gasoline-range hydrocarbons, especially in the presence of less than 1 ppm sulfur. When the catalyst contains an alkali or alkaline-earth metal, the catalyst is useful in a dehydrogenation process.

An objective of the invention is to provide a high density catalyst with a low ratio of platinum-group to tin that is useful in hydrocarbon conversion. Another objective is to provide a catalyst suitable for reforming that allows increased pinning margin, low coke make, and excellent activity.

Additional objects, embodiments and details of this invention can be obtained from the following detailed description of the invention.

### DETAILED DESCRIPTION OF THE INVENTION

A broad embodiment of the present invention, therefore, is a shaped catalyst which is prepared using support particles having an average bulk density greater than 0.6 g/cc. Preferably, the average bulk density is greater than 0.65 g/cc. Supports should be uniform in composition and relatively refractory to the conditions used in a hydrocarbon conversion process. Suitable supports include inorganic oxides such as one or more of alumina, magnesia, zirconia, chromia, titania, boria, thoria, phosphate, zinc oxide and silica. Alumina is a preferred support.

Suitable alumina materials are the crystalline aluminas known as the gamma, eta, and theta phase aluminas, with gamma or eta phase aluminas giving best results. A preferred alumina is that which has been characterized in US 3,852,190 and US 4,012,313 as a by-product from a Ziegler higher alcohol synthesis reaction as described in Ziegler's US 2,892,858. For purposes of simplification, such an alumina will be hereinafter referred to as a "Ziegler alumina". Ziegler alumina is presently available from the Vista Chemical Company under the trademark "Catapal" or from Condea Chemie GmbH under the trademark "Pural." This material is an extremely high purity pseudoboehmite which, after calcination at a high temperature, has been shown to yield a high purity gamma-alumina.

The preferred form of the present catalyst is a sphere. Alumina spheres may be continuously manufactured by the well known oil-drop method which comprises: forming an alumina slurry with Ziegler alumina or an alumina hydrosol by any of the techniques taught in the art and preferably by reacting aluminum metal with hydrochloric acid; combining the resulting hydrosol or slurry with a suitable gelling agent; and dropping the resultant mixture into an oil bath maintained at elevated temperatures. The droplets of the mixture remain in the oil bath until they set and form gelled spheres. The spheres are then continuously withdrawn from the oil bath and typically subjected to specific aging and drying treatments in oil and an ammoniacal solution to further improve their physical characteristics. The resulting aged and gelled particles are then washed and dried at a relatively low temperature of 150° to 205°C and subjected to a calcination procedure at a temperature of 450° to 700°C for a period of 1 to 20 hours. This treatment effects conversion of the alumina hydrogel to the corresponding crystalline gamma-alumina. US 2,620,314 provides for additional details. The use of the term "substantially spherical" refers to the geometric properties of most of the spheres being round and includes slight deviations.

An alternate form of the present catalyst is a cylindrical extrudate. A "substantially cylindrical" catalyst, defined with geometric properties of most of the cylinders being circular in one direction and linear in another, and including slight deviations therefrom, can be prepared by any of the well known to the art forming methods such as extrusion. The preferred extrudate form is prepared by mixing Ziegler alumina powder with water and suitable peptizing agents, such as nitric acid, acetic acid, aluminum nitrate and like materials, to form an extrudable dough having a loss on ignition (LOI) at 500°C of 45 to 65 mass-%. The resulting dough is extruded through a suitably shaped and sized die to form extrudate particles, which can be dried at a relatively low temperature of 150° to 205°C and subjected to a calcination procedure at a temperature of 450° to 700°C for a period of 1 to 20 hours.

Moreover, spherical particles can also be formed from the extrudates by rolling the extrudate particles on a spinning disk. An average particle diameter can vary from 1 mm to 10 mm, with the preferred particle diameter being approximately 3 mm.

After shaping, the catalyst is subjected to at least one calcination treatment. Preferably, this calcination is conducted at conditions selected to create a product catalyst comprising a calcined alumina with a characteristic X-ray pattern and desired physical properties in terms of surface area. This calcination typically takes place at a temperature of from 700° to 900°C, a moisture level of less than 4 mass-% steam and a time of 15 minutes to 20 hours. More preferably the calcination conditions comprise a temperature from 800° to 900°C, a moisture level of less than 3 mass-% steam and a time limit of 30 minutes to 6 hours. An oxygen atmosphere is employed typically comprising dry air. Dry air is considered air with no added moisture or steam, ranging from air that has been dried using chemical means such as molecular sieves or silica gels to ambient moisture levels. Generally the exact period of time being that required in order to reach the desired calcined alumina physical properties of surface area and piece crush strength. The relative amount of surface area reduction will be approximately between 5 to 30%. Further, the piece crush strength will be reduced at most to 95% of the original value. The piece strength can also increase due to this calcination such that greater than a 100% of the original value may be obtained.

Therefore, if the alumina prior to this calcination treatment has a surface area between 200 and 220 m²/gm, then the calcined alumina will have a surface area between 140 and 210 m²/gm (measured by BET/N₂ method, ASTM D3037, or equivalent). Preferably the calcined alumina will have a surface area from between 150 and 180 m²/gm. Note that this time requirement will, of course, vary with the calcination temperature employed and the oxygen content of the atmosphere employed. Note also that the alumina prior to this calcination treatment can have a surface area range from between 180 and 240 m²/gm, with the preferred range being from 200 to 220 m²/gm as illustrated above.

Excellent results are achieved when the catalyst has an X-ray diffraction pattern showing characteristic intensities of peaks at specified Bragg angle positions. Specifically, a preferred catalyst has an X-ray powder diffraction pattern such that the ratio of peak intensities at respective two-theta Bragg angle positions of 34.0:32.5 is at least 1.2 and the ratio of peak intensities at respective two-theta Bragg angle values of 46.0:45.5 is at most 1.1. The X-ray pattern may be obtained by standard X-ray powder diffraction techniques, of which a suitable example is described hereinbelow. Typically, the radiation source is a high-intensity, copper-target, X-ray tube operated at 45 KV and 35 mA. Flat compressed powder samples illustratively are scanned in a continuous mode with a step size of 0.030° and a dwell time of 9.0 seconds on a computer-controller diffractometer. The diffraction pattern from the copper K radiation may be recorded with a Peltier effect cooled solid-state detector. The data suitably are stored in digital format in the controlling computer. The peak heights and peak positions are read from the computer plot as a function of two times theta (two-theta), where theta is the Bragg angle.

An ingredient of the catalyst is a platinum-group-metal component. This component comprises platinum, palladium, ruthenium, rhodium, iridium, osmium or mixtures thereof, with platinum being preferred. The platinum-group metal may exist within the final catalytic composite as a compound such as an oxide, sulfide, halide, oxyhalide, etc., in chemical combination with one or more of the other ingredients of the composite or as an elemental metal. The best results are obtained when substantially all the platinum-group metal component is present in the elemental state and it is homogeneously dispersed within the carrier material. The platinum-group metal component may be present in the final catalyst composite in any amount that is catalytically effective; the platinum-group metal generally will comprise 0.01 to 2 mass-% of the final catalytic composite, calculated on an elemental basis. Excellent results are obtained when the catalyst contains 0.05 to 1 mass-% platinum.

The platinum-group metal component may be incorporated in the support in any suitable manner, such as coprecipitation, ion-exchange or impregnation. The preferred method of preparing the catalyst involves the utilization of a soluble, decomposable compound of a platinum-group metal to impregnate the carrier material in a relatively uniform manner. For example, the component may be added to the support by commingling the support with an aqueous solution of chloroplatinic or chloroiridic or chloropalladic acid. Other water-soluble compounds or complexes of platinum-group metals may be employed in impregnating solutions and include ammonium chloroplatinate, bromoplatinic acid, platinum trichloride, platinum tetrachloride hydrate, platinum dichlorocarbonyl dichloride, dinitrodiaminoplatinum, sodium tetranitroplatinate (II), palladium chloride, palladium nitrate, palladium sulfate, diamminepalladium (II) hydroxide, tetraamminepalladium (II) chloride, hexa-amminerhodium chloride, rhodium carbonylchloride, rhodium trichloride hydrate, rhodium nitrate, sodium hexachlororhodate (III), sodium hexanitrorhodate (III), iridium tribromide, iridium dichloride, iridium tetrachloride, sodium hexanitroiridate (III), potassium or sodium chloroiridate, potassium rhodium oxalate, etc. The utilization of a platinum, iridium, rhodium, or palladium chloride compound, such as chloroplatinic, chloroiridic or chloropalladic acid or rhodium trichloride hydrate, is preferred since it facilitates the incorporation of both the platinum-group-metal component and at least a minor quantity of the preferred halogen component in a single step. Hydrogen chloride or the like acid is also generally added to the impregnation solution in order to further facilitate the incorporation of the halogen component and the uniform distribution of the metallic components throughout the carrier material. In addition, it is generally preferred to impregnate the carrier material after calcination in order to minimize the risk of washing away the valuable platinum-group metal.

Generally the platinum-group metal component is dispersed homogeneously in the catalyst. Preferably, homogeneously dispersion of the platinum-group metal is determined by electron microprobe analysis comparing local metals concentrations with overall catalyst metal content. Homogeneous distribution is synonymous with uniform distribution. In an alternative embodiment one or more platinum-group metal components may be present as a surface-layer component as described in US 4,677,094. The "surface layer" is the layer of a catalyst particle adjacent to the surface of the particle, and the concentration of surface-layer metal tapers off when progressing from the surface to the center of the catalyst particle.

A tin component is another ingredient of the catalyst of the present invention. The component may be present as an elemental metal, as a chemical compound such as the oxide, sulfide, halide, oxychloride, etc., or as a physical or chemical combination with the porous carrier material and/or other components of the catalytic composite. Preferably, a substantial portion of the tin component exists in the finished catalyst in an oxidation state above that of the elemental metal. The tin component optimally is utilized in an amount sufficient to result in a final catalytic composite containing 0.01 to 5 mass-% metal, calculated on an elemental basis, with best results obtained at a level of 0.1 to 2 mass-% metal.

The tin component may be incorporated in the catalyst in any suitable manner to achieve a homogeneous dispersion, such as by coprecipitation with the porous carrier material, ion-exchange with the carrier material or impregnation of the carrier material at any stage in the preparation. One method of incorporating the tin component into the catalyst composite involves the utilization of a soluble, decomposable compound of a tin to impregnate and disperse the metal throughout the porous carrier material. The tin component may be impregnated either prior to, simultaneously with, or after the other components are added to the carrier material. Thus, the tin component may be added to the carrier material by commingling the carrier material with an aqueous solution of a suitable metal salt or soluble compound such as stannous bromide, stannous chloride, stannic chloride, stannic chloride pentahydrate; and the like compounds. The utilization of stannic chloride is particularly preferred since it facilitates the incorporation of both the metal component and at least a minor amount of the preferred halogen component in a single step. When combined with hydrogen chloride during the especially preferred alumina peptization step described hereinabove, a homogeneous dispersion of the tin component is obtained in accordance with the present invention. In an alternative embodiment, organic metal compounds such as trimethyltin chloride and dimethyltin dichloride are incorporated into the catalyst during the peptization of the inorganic oxide binder, and most preferably during peptization of alumina with hydrogen chloride or nitric acid.

Optionally, the catalyst may also contain multiple Group IVA metal components or other components or mixtures thereof that act alone or in concert as catalyst modifiers to improve activity, selectivity or stability. Some other known catalyst modifiers include rhenium, gallium, cerium, lanthanum, europium, indium, phosphorous, nickel, iron, tungsten, molybdenum, zinc, and cadmium. Catalytically effective amounts of these components may be added to the carrier material in any suitable manner during or after its preparation or to the catalytic composite before, during or after other components are being incorporated. Generally, good results are obtained when these components constitute 0.01 to 5 mass-% of the composite, calculated on an elemental basis of each component.

Another optional component of the catalyst, particularly useful in hydrocarbon conversion processes comprising dehydrogenation, dehydrocyclization, or hydrogenation reactions, is an alkali or alkaline-earth metal component. More precisely, this optional ingredient is selected from the group consisting of the compounds of the alkali metalscesium, rubidium, potassium, sodium, and lithium -- and the compounds of the alkaline earth metals -- calcium, strontium, barium, and magnesium. Generally, good results are obtained when this component constitutes 0.01 to 5 mass-% of the composite, calculated on an elemental basis. This optional alkali or alkaline earth metal component may be incorporated into the composite in any of the known ways by impregnation with an aqueous solution of a suitable water-soluble, decomposable compound being preferred.

As heretofore indicated, it is desirable to employ at least one calcination step in the preparation of the catalyst. An optional step of the invention is a high temperature calcination step that also may also be called an oxidation step, which preferably takes place before incorporation of any metals to the support but can be performed after incorporation of any metals. When the high temperature calcination occurs before incorporation of any metals, good results are obtained when a lower temperature oxidation step and an optional halogen adjustment step follow the addition of any metals.

The conditions employed to effect the lower temperature oxidation step are selected to convert substantially all of the metallic components within the catalytic composite to their corresponding oxide form. The oxidation step typically takes place at a temperature of from 370° to 600°C. An oxygen atmosphere comprising air is typically employed. Generally, the oxidation step will be carried out for a period of from 0.5 to 10 hours or more, the exact period of time being that required to convert substantially all of the metallic components to their corresponding oxide form. This time will, of course, vary with the temperature employed and the oxygen content of the atmosphere employed.

In addition to the oxidation step, a halogen adjustment step may also be employed in preparing the catalyst. The halogen adjustment step may serve a dual function. First, the halogen adjustment step may aid in homogeneous dispersion of the tin component and any other metal components. Additionally, the halogen adjustment step can serve as a means of incorporating the desired level of halogen into the final catalytic composite. The halogen adjustment step employs a halogen or halogen-containing compound in air or an oxygen atmosphere. Since the preferred halogen for incorporation into the catalytic composite comprises chlorine, the preferred halogen or halogen-containing compound utilized during the halogen adjustment step is chlorine, HCl or precursor of these compounds. In carrying out the halogen adjustment step, the catalytic composite is contacted with the halogen or halogen-containing compound in air or an oxygen atmosphere at an elevated temperature of from 370° to 600°C. Water may be present during the contacting step in order to aid in the adjustment. In particular, when the halogen component of the catalyst comprises chlorine, it is preferred to use a mole ratio of water to HCl of 5:1 to 100:1. The duration of the halogenation step is typically from 0.5 to 5 hours or more. Because of the similarity of conditions, the halogen adjustment step may take place during the oxidation step. Alternatively, the halogen adjustment step may be performed before or after the calcination step as required by the particular method being employed to prepare the catalyst of the present invention. Irrespective of the exact halogen adjustment step employed, the halogen content of the final catalyst should comprise, on an elemental basis, from 0.1 to 10 mass-% of the finished composite.

In preparing the catalyst, a reduction step may also be optionally employed. The reduction step is designed to reduce substantially all of the platinum-group metal component to the corresponding elemental metallic state and to ensure a relatively uniform and finely divided dispersion of the component throughout the refractory inorganic oxide. It is preferred that the reduction step takes place in a substantially water-free environment. Preferably, the reducing gas is substantially pure, dry hydrogen (i.e., less than 20 volume ppm water). However, other reducing gases may be employed such as CO, nitrogen, etc. Typically, the reducing gas is contacted with the oxidized catalytic composite at conditions including a reduction temperature of from 315° to 650°C for a period of time of from 0.5 to 10 or more hours effective to reduce substantially all of the platinum-group metal component to the elemental metallic state. The reduction step may be performed prior to loading the catalytic composite into the hydrocarbon conversion zone or may be performed in situ as part of a hydrocarbon conversion process start-up procedure and/or during reforming of the hydrocarbon feedstock. However, if the in-situ technique is employed, proper precautions must be taken to pre-dry the hydrocarbon conversion plant to a substantially water-free state and a substantially water-free hydrogen-containing reduction gas should be employed.

Optionally, the catalytic composite may also be subjected to a presulfiding step. The optional sulfur component may be incorporated into the catalyst by any known technique.

A critical property of the catalyst is the bulk mass ratio of the platinum-group component to the tin component. The bulk mass ratio of platinum-group to tin is less than 0.9. Especially preferred is a bulk mass ratio of less than 0.85.

A technique that can examine the local electronic structure of the tin used in the present invention (oxidation state, environment, chemical bonding) is Mössbauer spectroscopy. The isomer shift measures the energy position of the Mössbauer absorption, a function of the electron density of the nuclei of the 119 Sn atoms in the absorber as compared to the source, directly characterizes the oxidation state of the tin. The quadrupolar splitting, which defines the environment of the absorption, is a function of the distribution of the surrounding charges, and characterizes the degree of coordination and thus the type of chemical bond in which the tin is involved. Mössbauer spectroscopy also provides information regarding the degree of order and the distribution of the sites occupied by the tin. Preferably, the catalyst of the present invention contains tin characterized using Mössbauer spectroscopy to measure the amount of tin associated within specific platinum-group tin clusters wherein the effective molar ratio of such associated tin is at least 0.65. The amount of associated tin will be greater than 33 mass-% of the total bulk tin, with an amount greater than 35 mass-% being preferred. Using this characterization tool, it has additionally been found that the catalysts of the invention are characterized in that at least 10% and preferably at least 15% of the tin present in the catalyst is in a reduced state. By reduced state is meant Sn⁰.

The catalyst of the present invention has particular utility as a hydrocarbon conversion catalyst. The hydrocarbon is to be converted is contacted with the catalyst at hydrocarbon-conversion conditions, which include a temperature of from 40° to 550°C, a pressure of from atmospheric to 200 atmospheres absolute and liquid hourly space velocities from 0.1 to 100 hr⁻¹. The catalyst is particularly suitable for catalytic reforming of gasoline-range feedstocks, and also may be used for dehydrocyclization, isomerization of aliphatics and aromatics, dehydrogenation, hydrocracking, disproportionation, dealkylation, alkylation, transalkylation, oligomerization, and other hydrocarbon conversions. The present invention provides greater stability and lowered coke production relative to other catalysts known to the art when used to process gasoline-range feedstock as a catalytic reforming catalyst. Preferably, the gasoline-range feedstock has a sulfur content less than 1 part per million. The present invention also provides greater stability and lowered coke production relative to other catalysts known to the art when used in a dehydrogenation process where the catalyst comprises an alkali or alkaline earth metal component.

The following examples will serve to illustrate certain specific embodiments of the present invention. These examples should not, however, be construed as limiting the scope of the invention as set forth in the claims. There are many other possible variations, as those of ordinary skill in the art will recognize, which are within the spirit of the invention.

### EXAMPLE 1

Two spherically shaped catalysts, A and B, that were commercially manufactured via the oil drop method, were treated with a dry high-temperature calcination in air containing approximately 2.5 mass-% water at 860°C for 45 minutes. Then platinum was impregnated on the oil dropped support after calcination from an aqueous solution of chloroplatinic acid and HCl. Note that tin was added to the alumina sol prior to the oil dropping. Next, catalyst preparations were oxidized in an air flow of 1000 hr⁻¹ gas hourly space velocity (GHSV), at 510°C for 8 hours, while simultaneously injecting HCl solution and chlorine gas. The catalyst was reduced in a 425 GHSV mixture of nitrogen and 15 mol-% hydrogen. Reduction temperature was 565°C and held for two hours. The properties of the catalysts were:

| Sample | Average Bulk Density, g/cc | Pt, wt-% | Sn, wt-% | Sn/Pt, mol/mol | Cl, wt-% |
|---|---|---|---|---|---|
| A | 0.591 | 0.29 | 0.30 | 1.68 | 0.99 |
| B | 0.579 | 0.37 | 0.30 | 1.33 | 1.00 |

The reforming performance of each catalyst was obtained. A volume of 60 cc of each catalyst was loaded in a reactor in three separate beds to represent a series of reforming reactors. The conditions for the tests were: a pressure of 517 kPa (75 psig), a liquid hourly space velocity (LHSV) of 1.7 hr⁻¹, a hydrogen/hydrocarbon mole ratio of 2.0. The test used a naphtha feedstock with a bulk paraffin/naphthenes/aromatic composition of 58.7/30.6 /10.7 liquid vol-% and an ASTM D-86 distillation from initial boiling point of 68.3°C to a final boiling point of 160°C. Naphtha feedstock was analyzed to contain 0.4 wt-ppm sulfur. For each run, the target research octane (RON) of 105 was obtained, and then the temperature was increased continuously to maintain constant RON. Each run was equal in the length of time. After each run, the spent pilot plant catalyst was dumped keeping each bed separate. A sample from each bed was submitted for carbon burn and the results were weight-averaged to calculate the average carbon. The reforming performance at 7 feed barrels per ft³ of catalyst (BPCF) [or 39.3 m³ feed/m³ catalyst] and 105 RON was:

| Sample | Temp., °C | C₅⁺ Yield, wt-% | Average Carbon on Catalyst, g/100 cc |
|---|---|---|---|
| A | 517 | 86.7 | 1.75 |
| B | 519 | 86.8 | 2.14 |

The samples were analyzed with Mössbauer spectroscopy to determine the extent of the Sn associated with the Pt metal. The effective Sn/Pt ratio represented the amount of Sn that was associated with Pt and was different from the bulk Sn/Pt ratio which includes all Sn and Pt in the sample. The effective Sn/Pt mole ratio was calculated by multiplying the bulk Sn/Pt mole ratio by the fraction of Sn associated with Pt from the Mössbauer analyses. The Mössbauer results and the effective Sn/Pt ratios for Catalysts A and B were found to be:

| Catalyst | Bulk Sn/Pt mol/mol | Mössbauer %Sn associated with Pt | Effective Sn/Pt ratio based on Mössbauer, mol/mol |
|---|---|---|---|
| A | 1.68 | 33 | 0.56 |
| B | 1.33 | 47 | 0.62 |

### EXAMPLE 2

Two additional catalysts, C and D, that contained 0.256 and 0.375 wt-% Pt were prepared by impregnating commercially-manufactured supports (by the oil drop method) using chloroplatinic acid. The catalysts were oxychlorinated at high temperature in flowing air that contained HCl, water, and Cl₂ and subsequently reduced at high temperature in flowing hydrogen for 2 hours using the same conditions as Example I. The properties of the catalysts are:

| Sample | Average Bulk Density, g/cc | Pt, wt-% | Sn, wt-% | Sn/Pt, mol/mol | Cl, wt-% |
|---|---|---|---|---|---|
| C | 0.685 | 0.26 | 0.30 | 1.89 | 0.98 |
| D | 0.691 | 0.38 | 0.28 | 1.23 | 1.03 |

The reforming performance of Catalysts C and D were obtained with the same procedures as described in Example 1. The reforming performance at 7 BPCF [or 39.3 m³ feed/m³ catalyst] and 105 RON was:

| Sample | Temp., °C | C₅⁺ Yield, wt-% | Average Carbon on Catalyst, g/100 cc |
|---|---|---|---|
| C | 515 | 86.3 | 1.78 |
| D | 518 | 86.3 | 2.88 |

The samples were analyzed with Mössbauer spectroscopy to determine the extent of the Sn associated with the Pt metal. The Mössbauer results and the effective Sn/Pt ratios for Catalysts C and D were found to be:

| Catalyst | Bulk Sn/Pt mol/mol | Mössbauer %Sn associated with Pt | Effective Sn/Pt ratio based on Mössbauer, mol/mol |
|---|---|---|---|
| C | 1.89 | 35 | 0.66 |
| D | 1.23 | 33 | 0.41 |

The Mössbauer results for Catalysts A, B, C and D show that the %Sn association did not increase for high density and high platinum containing Catalyst D (33% Sn association) as it was expected based on low density and high platinum containing Catalyst B (47% Sn association). From the reforming performance tests, Catalyst D shows a significantly higher carbon production which is disadvantageous for commercial reforming units. Such an increase in carbon production reflects poorer stability and causes a significant relative increase in regenerator duty required to burn the higher relative carbon level during catalyst operation. High carbon can also lead to a regenerator limit such that a refiner may have to decrease conversion and/or feed rate in order to reduce the carbon production. Additionally, Catalyst C showed the best activity by achieving the target RON at the lowest temperature. Therefore, for high-density catalysts of this invention, it is critical to have effective platinum-group to tin ratios that maintain acceptable reforming performance and permit operation with high density catalyst to allow operation of a moving bed with increased pinning margin under hydrocarbon conversion conditions.

### EXAMPLE 3

A representative X-ray diffraction pattern of the catalysts from the previous examples was obtained by standard X-ray powder techniques. The diffraction pattern showed that the catalysts are similar to the material disclosed in US 6,514,904, which is incorporated herein by reference thereto. The peaks were characterized by taking ratios of peak intensities as compared to conventional gamma alumina. The ratios of peak intensities at respective two-theta Bragg angle values of 34.0:32.5 and 46.0:45.5 were determined to be 1.0 and 1.1 for conventional gamma alumina and 1.4 and 1.0 for the catalysts of the present invention.

## Claims

1. A hydrocarbon conversion catalyst comprising a platinum-group component, a tin component, and a support component having an average bulk density greater than 0.6 g/cc and preferably greater than 0.65 g/cc, wherein the bulk mass ratio of platinum-group to tin is less than 0.9 and preferably less than 0.85, wherein the platinum-group component is platinum present in an amount from 0.01 to 2.0 mass-% of the catalyst calculated on an elemental basis, and wherein said catalyst contains associated tin in specific platinum-tin clusters, with associated tin present in an amount at least 33 mass-% of the tin component, and the effective molar ratio of associated tin to platinum in said clusters is at least 0.65 as **characterized** with Mössbauer spectroscopy.

2. The catalyst of claim 1 wherein the support component is an inorganic oxide binder selected from the group consisting of alumina, magnesia, zirconia, chromia, titania, boria, thoria, phosphate, zinc oxide, silica and mixtures thereof and is preferably alumina.

3. The catalyst of claim 2 wherein the inorganic oxide binder is alumina and further **characterized** with an X-ray powder diffraction pattern such that the ratio of peak intensities at respective two-theta Bragg angle values of 34.0:32.5 is at least 1.2 and the ratio of peak intensities at respective two-theta Bragg angle values of 46.0:45.5 is at most 1.1.

4. The catalyst of any of claims 1 to 3 further comprising a metal promoter component selected from the group consisting of germanium, rhenium, gallium, cerium, lanthanum, europium, indium, phosphorous, nickel, iron, tungsten, molybdenum, zinc, cadmium and mixtures thereof, wherein the metal promoter comprises from 0.01 to 5.0 mass-% of the catalyst calculated on an elemental basis.

5. The catalyst of any of claims 1 to 3 further comprising a halogen component present in an amount from 0.1 to 10 mass-% of the catalyst.

6. The catalyst of any of claims 1 to 3 wherein the alumina has a surface area from 140 to 210 m²/gm and preferably the surface area is from 150 to 180 m²/gm.

7. The catalyst of any of claims 1 to 3 wherein the bulk mass ratio of platinum-group to tin is less than 0.85.

8. A hydrocarbon conversion process comprising contacting a hydrocarbon feedstock with a catalyst of any of claims 1 to 7 at hydrocarbon-conversion conditions to give a converted hydrocarbon.

9. The process of claim 8 wherein the hydrocarbon feedstock of naphtha range feedstock and the process is a catalytic reforming process.

10. The process of claim 8 wherein the process of a dehydrogenation process and the catalyst further comprises an alkali or alkaline-earth metal dispersed onto the shaped catalyst in an amount from 0.01 to 5.0 mass-% of the catalyst calculated on an elemental basis.

## Patentansprüche

1. Kohlenwasserstoffumwandlungskatalysator, der eine Platingruppenkomponente, eine Zinnkomponente und eine Trägerkomponente enthält, mit einer mittleren Schüttdichte von mehr als 0,6 g/cm³ und vorzugsweise mehr als 0,65 g/cm³, worin das Bulkmassenverhältnis von Platingruppe zu Zinn weniger als 0,9 und vorzugsweise weniger als 0,85 beträgt, worin es sich bei der Platingruppenkomponente um Platin handelt, das in einer Menge von 0,01 bis 2,0 Masse-% des Katalysators, berechnet auf Elementbasis, vorliegt, und worin der Katalysator assoziiertes Zinn in spezifischen Platin-Zinn-Clustern enthält, wobei assoziiertes Zinn in einer Menge von mindestens 33 Masse-% der Zinnkomponente vorliegt und das effektive Molverhältnis von assoziiertem Zinn zu Platin in den Clustern gemäß Charakterisierung mittels Mössbauer-Spektroskopie mindestens 0,65 beträgt.

2. Katalysator nach Anspruch 1, worin es sich bei der Trägerkomponente um ein als Bindemittel dienendes anorganisches Oxid aus der Gruppe bestehend aus Aluminiumoxid, Magnesiumoxid, Zirconiumoxid, Chromoxid, Titanoxid, Boroxid, Thoriumoxid, Phosphat, Zinkoxid, Siliciumoxid und Mischungen davon und vorzugsweise Aluminiumoxid handelt.

3. Katalysator nach Anspruch 2, worin es sich bei dem als Bindemittel dienenden anorganischen Oxid um Aluminiumoxid handelt, und ferner **gekennzeichnet durch** ein solches Röntgenpulverdiffraktogramm, daß das Verhältnis der Reflexintensitäten bei den jeweiligen 2-Theta-Bragg-Winkel-Werten von 34,0:32,5 mindestens 1,2 beträgt und das Verhältnis der Reflexintensitäten bei den jeweiligen 2-Theta-Bragg-Winkel-Werten von 46,0:45,5 höchstens 1,1 beträgt.

4. Katalysator nach einem der Ansprüche 1 bis 3, der ferner eine Metallpromotorkomponente aus der Gruppe bestehend aus Germanium, Rhenium, Gallium, Cer, Lanthan, Europium, Indium, Phosphor, Nickel, Eisen, Wolfram, Molybdän, Zink, Cadmium und Mischungen davon enthält, worin der Metallpromotor 0,01 bis 5,0 Masse-% des Katalysators, berechnet auf Elementbasis, ausmacht.

5. Katalysator nach einem der Ansprüche 1 bis 3, der ferner eine Halogenkomponente enthält, die in einer Menge von 0,1 bis 10 Masse-% des Katalysators vorliegt.

6. Katalysator nach einem der Ansprüche 1 bis 3, worin das Aluminiumoxid eine Oberfläche von 140 bis 210 m²/g aufweist und die Oberfläche vorzugsweise 150 bis 180 m²/g beträgt.

7. Katalysator nach einem der Ansprüche 1 bis 3, worin das Bulkmassenverhältnis von Platingruppe zu Zinn weniger als 0,85 beträgt.

8. Kohlenwasserstoffumwandlungsverfahren, bei dem man einen Kohlenwasserstoff-Einsatzstoff unter Kohlenwasserstoffumwandlungsbedingungen mit einem Katalysator nach einem der Ansprüche 1 bis 7 in Berührung bringt, wobei man einen umgewandelten Kohlenwasserstoff erhält.

9. Verfahren nach Anspruch 8, bei dem es sich bei dem Kohlenwasserstoff-Einsatzstoff um einen Einsatzstoff aus dem Naphthabereich handelt und es sich bei dem Verfahren um ein katalytisches Reformierungsverfahren handelt.

10. Verfahren nach Anspruch 8, bei bem es sich um ein Dehydrierungsverfahren handelt und der Katalysator ferner ein Alkali- oder Erdalkalimetall enthält, das auf dem geformten Katalysator in einer Menge von 0,01 bis 5,0 Masse-% des Katalysators, berechnet auf Elementbasis, verteilt ist.

## Revendications

1. Catalyseur de conversion d'hydrocarbures comprenant un composant du groupe platine, un composant à base d'étain et un composant de support dont la masse volumique apparente est supérieure à 0,6 g/cc et de préférence supérieure à 0,65 g/cc, dans lequel le rapport de la masse volumique apparente du groupe platine à l'étain est inférieur à 0,9 et de préférence inférieure à 0,85, dans lequel le composant du groupe platine est du platine présent en une quantité de 0,01 a 2,0 % en masse du catalyseur, calculée sur une base élémentaire, et dans lequel ledit catalyseur contient de l'étain associé dans des agrégats platine-étain particuliers, avec l'étain associé présent en une quantité d'au moins 33 % en masse du composant à base d'étain, et le rapport molaire effectif de l'étain associé au platine dans lesdits agrégats est d'au moins 0,65 tel que **caractérisé par** spectroscopie Môssbauer.

2. Catalyseur selon la revendication 1, dans lequel le composant de support est un liant à base d'oxyde inorganique choisi parmi le groupe constitué de l'alumine, de la magnésie, de la zircone, de l'oxyde de chrome, du dioxyde de titane, de l'oxyde de bore, de la thorine, d'un phosphate, de l'oxyde de zinc, de la silice et de mélanges de ceux-ci, et est de préférence de l'alumine.

3. Catalyseur selon la revendication 2, dans lequel le liant à base d'oxyde inorganique est l'alumine et est **caractérisé en outre par** un spectre de diffraction des rayons X sur poudre de sorte que le rapport des intensités des pics à des valeurs d'angle de Bragg de deux thêta respectives de 34,0:32,5 est d'au moins 1,2 et le rapport des intensités des pics à des valeurs d'angle de Bragg de deux thêta de 46,0:45,5 est d'au plus 1,1.

4. Catalyseur selon l'une quelconque des revendications 1 à 3, qui comprend en outre un composant promoteur métallique choisi parmi le groupe constitué du germanium, du rhénium, du gallium, du cérium, du lanthane, de l'europium, de l'indium, du phosphore, du nickel, du fer, du tungstène, du molybdène, du zinc, du cadmium et de mélanges de ceux-ci, dans lequel le promoteur métallique constitue de 0,01 à 5,0 % en masse du catalyseur calculé sur une base élémentaire.

5. Catalyseur selon l'une quelconque des revendications 1 à 3, qui comprend un composant halogène présent en une quantité de 0,1 à 10 % en masse du catalyseur.

6. Catalyseur selon l'une quelconque des revendications 1 à 3, dans lequel l'alumine possède une surface active de 140 à 210 m²/gm et de préférence une surface active de 150 à 180 m²/gm.

7. Catalyseur selon l'une quelconque des revendications 1 à 3, dans lequel le rapport de la masse volumique apparente du groupe platine à l'étain est inférieur à 0,85.

8. Procédé de conversion d'hydrocarbures qui comprend la mise en contact d'une alimentation d'hydrocarbures avec un catalyseur selon l'une quelconque des revendications 1 à 7 dans des conditions de conversion d'hydrocarbures pour donner un hydrocarbure converti.

9. Procédé selon la revendication 8, dans lequel l'alimentation d'hydrocarbures est une alimentation de type naphta et le procédé est un procédé de reformage catalytique.

10. Procédé selon la revendication 8, dans lequel le procédé d'un procédé de déshydrogénation et le catalyseur comprennent en outre un métal alcalin ou alcalino-terreux dispersé sur un catalyseur formé en une quantité de 0,01 à 5,0 % en masse du catalyseur, calculée sur une base élémentaire.
